# EUROPEAN PATENT APPLICATION

(11) **EP 4 531 061 A1**
(43) Date of publication of application: **02.04.2025**
(21) Application number: 23306637.2
(22) Date of filing: 29.09.2023
(51) Int. Cl.: H01B 13/00, H01R 43/26, H02G 1/14, H02G 15/08, H02G 15/18, H02G 15/196

(54) **A METHOD AND MACHINE FOR APPLYING A POLYMER FILM TO AN ELECTRIC CONDUCTOR JOINT**

(71) Applicant: Nexans, 92400 Courbevoie (FR)
(72) Inventor: DOEDENS, Espen, 1788 Halden (NO); JARVID, Markus, 442 42 Kungävl (SE); JACOBSEN, Brynjar, 1784 Halden (NI)
(74) Representative: Onsagers AS

(57) **Abstract**

The present invention relates to a method for applying a polymer film (31) onto an electric conductor joint (2). The method comprises the steps of:
- providing an electric conductor joint (2) oriented in a cable direction (Al);
- providing a roll (32) with a polymer film (31);
- securing an end of the polymer film (31) to the electric conductor joint (2);
- moving the roll about the electric conductor joint thereby releasing the polymer film from the roll and rotating the roll about an longitudinal center axis;
- orienting the roll with the longitudinal center axis parallel with the cable direction during the movement of the roll about the electric conductor joint. The present invention also relates to a machine for performing the method.

## Description

### TECHNICAL FIELD

The present invention relates to a method for applying a polymer film to an electric conductor joint. The present invention also relates to a machine for applying a polymer film to an electric conductor joint.

### BACKGROUND

Today's methods for fabricating cable joints for high voltage subsea cables are complex and labor intensive with risk for poor geometry or voids in the overlap, as tape is placed on the joint in a helix. This increases the risk for entrapping air.

The aim of the present invention is to reduce the complexity of manufacture and to reduce risk of poor quality.

### SUMMARY OF THE INVENTION

The present invention relates to a method for applying a polymer film onto an electric conductor j oint, wherein the method comprises the steps of:
- providing an electric conductor joint oriented in a cable direction;
- providing a roll with a polymer film;
- securing an end of the polymer film to the electric conductor joint;
- moving the roll about the electric conductor joint thereby releasing the polymer film from the roll and rotating the roll about an longitudinal center axis;
- orienting the longitudinal center axis of the roll substantially parallel with the cable direction during the movement of the roll about the electric conductor joint.

In the instant description, the relative orientation of the longitudinal center axis of the roll and the cable direction are referred to as being substantially parallel. Here, the term "substantially parallel" means that the angle between the longitudinal center axis of the roll and the cable direction, when projected onto any planar surface parallel to the cable direction, remains preferably of at most 10°(namely forming an angle between 0° and 10°), more preferably well lower than 10°, for example of at most 5°(namely between 0° and 5°), and even more preferably of at most 3°(namely between 0° and 3°) during the movement of the roll about the electric conductor joint.The method of the invention therefore distinguishes from prior art methods wherein a polymer tape is applied in a helix pattern.

In one aspect, the tapered end of the polymer section is tapering towards the conductor joint.

In one aspect, the roll only rotates about the cable direction and has zero displacement in the cable direction.

In one aspect, the step of moving the roll about the cable joint comprises the step of holding and moving the roll manually by an operator.

In one aspect, the roll is substantially cylindrical.

In one aspect, the polymer film is applied to the outermost surface of the conductor joint or to other layers of polymer film.

In one aspect, the polymer film has a thickness of between 50-1000 µm.

In one aspect, the method for applying a polymer film to the conductor joint is applied to create an insulation layer.

In one aspect, the method for applying a polymer film to the conductor joint is applied to create an inner semi-conductive layer.

In one aspect, the method for applying a polymer film to conductor joint is applied to create an outer semi-conductive layer.

The width of the polymer film is chosen to be between a minimum width and maximum width, wherein the minimum width and maximum width depend on the type of layer being applied.

In one aspect, the polymer film has a width that is equal to or wider than the maximum width between the tapered end of the polymer sections.

In one aspect, the polymer film has a width that is equal to or wider than the maximum width between the inner semi-conductive layers.

In one aspect, the polymer film has a width that is equal to or wider than the maximum width between the outer semi-conductive layers.

In one aspect, the step of moving the roll about the electric conductor joint comprises the step of:
- controlling the movement of the roll about the electric conductor joint by means of a first actuator.

In one aspect, the method further comprises the step of:
- rotating the roll to release the polymer film from the roll.

In one aspect, the roll is rotated by the step of pulling of the polymer film as the polymer film is applied around the cable joint.

In one aspect, the method comprises the step of slowing down the rotation of the roll.

In one aspect, the method comprises the step of slowing down the rotation of the roll by means of a friction device.

In one aspect, the step of rotating the roll comprises:
- controlling the rotation of the roll by means of a second actuator.

According to the above, by controlling the rotation of the roll and by controlling the movement of the roll about the cable joint, the polymer film may be applied with a predetermined tension.

In one aspect, the method comprises the further step of:
- trimming a width of the polymer film during application of the polymer film to the electric conductor joint.

In one aspect, the method comprises a step of forming the electric conductor joint prior to the step of moving the roll; wherein the step of forming the electric conductor joint comprises:
- providing two cable ends oriented in the cable direction;
wherein each cable end comprises a conductor and a tapered end of a polymer section provided at least partially outside of the conductors;
- connecting the conductors to each other to form the electric conductor joint.

In one aspect, the trimming of the polymer film is performed by means of a trimming knife.

In one aspect, the trimming of the polymer film is controlled manually.

In one aspect, the trimming of the polymer film is performed automatically with input from a sensor, for example by means of a optical sensor.

In one aspect, the width of the polymer film is measured in a direction parallel to the longitudinal center axis of the roll.

In one aspect, the step of trimming the width of the polymer film further comprises trimming the width according to a distance between the tapered ends at a current radius of the tapered ends of the polymer section.

In one aspect, residual film resulting from the trimming are collected onto a rollers for residual film.

In one aspect, the step of providing the roll with the polymer film comprises the step of:
- providing the roll with the polymer film having a width being at least as wide as a maximum width between the tapered end of the polymer sections.

In one aspect, the polymer film is flexible to follow the shape of the tapered end of the polymer sections.

In one aspect, the method comprises the further step of:
- trimming any excessive polymer film extending beyond a predetermined threshold diameter being equal to or larger than a diameter of the polymer sections.

In one aspect, the predetermined threshold diameter is equal to or slightly larger than the maximum outer diameter of the polymer sections.

In one aspect, the predetermined threshold diameter is 5-50% larger than diameter of polymer sections.

In one aspect, the step of providing a roll with a polymer film further comprises:
- providing a polymer film with varying thickness along a length of the polymer film.

In one aspect, the polymer film is thinner initially and increases film thickness to accelerate completion of the layer.

The present invention relates to a machine for applying a polymer film to an electric conductor j oint, wherein the electric conductor joint is formed by providing two cable ends oriented in a cable direction and by connecting the conductors to each other to form the electric conductor joint;
wherein the machine comprises:
   - a base frame;
wherein the base frame is provided with an opening in which one of the cable ends is supported;
   - a first roll supporting structure;
wherein the first roll supporting structure comprises a roll with a polymer film;
wherein the first roll supporting structure is moveably connected to the base frame and is adapted to moving the roll about the electric conductor joint, thereby releasing the polymer film from the roll.

In one aspect, the first roll supporting structure is connected to a first end of the roll and wherein the machine comprises a second roll supporting structure connected to a second end of the roll.

In one aspect, the machine comprises a trimming knife configured to trim a width of the polymer film during application of the polymer film to the electric conductor joint.

In one aspect, the trimming knife is a fixed knife.

In one aspect, the trimming knife is a rolling knife.

In one aspect, the machine further comprises:
- a first actuator for moving the first roll supporting structure thereby moving the roll about the electric conductor joint.

In one aspect, the machine further comprises:
- a second actuator configured to control the rotation of the roll relative to the roll supporting structure.

In one aspect, the machine comprises a third actuator for moving the trimming knife.

In one aspect, the machine comprises a control system for controlling the first actuator and/or the second actuator and/or the third actuator.

In one aspect, the actuators are adjusted to achieve pre-set target movements or rotation in order to achieve a predetermined tension of the film applied to the electric cable conductor.

### DETAILED DESCRIPTION

Fig. 1 illustrates schematically a state-of-the-art cable joint;
Fig. 2a illustrate schematically a plan view of the preparation of cable ends before applying a polymer film as part of creating the cable joint;
Fig. 2b illustrate schematically a plan view of initiating of the method for applying the polymer film to the cable joint;
Fig. 3a illustrates schematically a cross-sectional view of the method for applying the polymer film to the cable joint;
Fig. 3b and c illustrate schematically a cross-sectional view of the length and thickness of the polymer film;
Fig. 4 illustrates schematically a plan view of a machine for applying the polymer film to an inner semi-conductive layer of the cable joint; wherein the machine is provided with a single roll supporting structure;
Fig. 5 illustrates an alternative to fig. 4, wherein the machine is provided with two roll supporting structures;
Fig. 6 illustrates schematically a plan view of the machine for applying a polymer film to an insulation layer of the cable joint; wherein the polymer film has constant width;
Fig. 7 illustrates schematically a plan view of the machine for applying a polymer film to an insulation layer of the cable joint; wherein the polymer film is trimmed;
Fig. 8 illustrates schematically a cross-sectional view of the above machine;
Fig. 9 illustrates schematically a control system of the above machine;
Fig. 10 shows schematically a cross-section of the resulting cable joint with polymer film applied where the width was trimmed;
Fig. 11 shows schematically a cross-section of the resulting cable joint with polymer film applied and excess material removed.

### Cable joints 1 for high voltage subsea cables

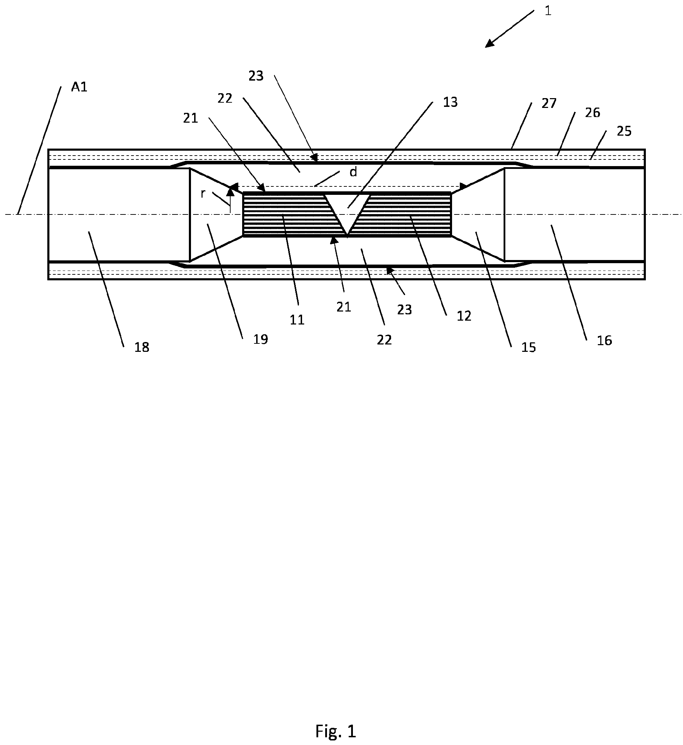

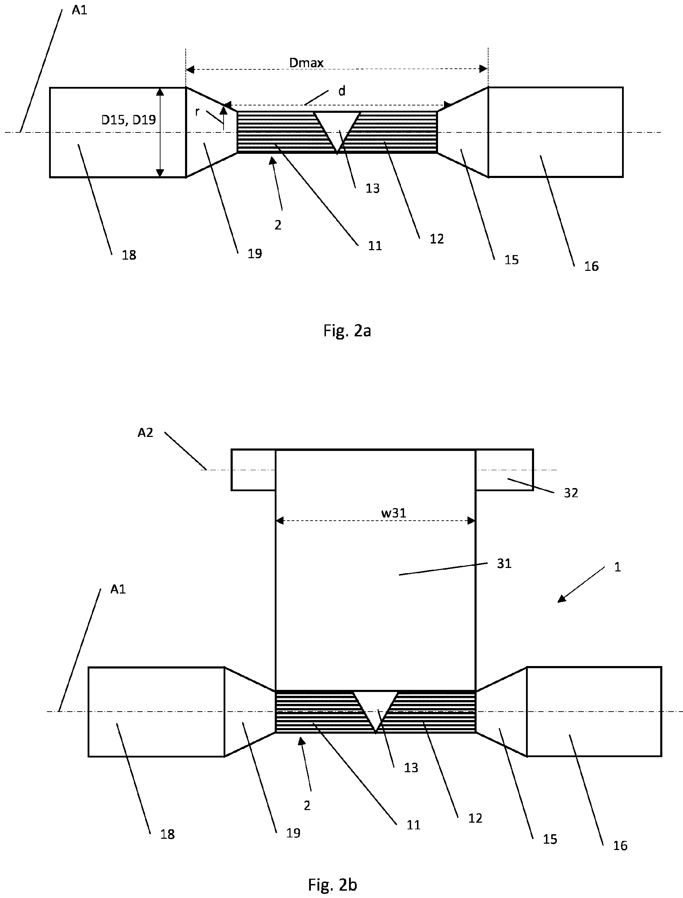

The invention presented herein improves the state-of-the-art cable joints as illustrated in fig 1. Fig 2a shows the preparation of a first cable end 16 and a second cable end 18 before applying a polymer film as a step of creating a cable joint 1 for high voltage subsea cables.

Initially, the two cable ends 16, 18 are aligned and their conductors 11, 12 are mechanically and electrically joined at a connection 13 for forming an electric conductor joint 2. As shown in fig. 2a, the electric conductor joint 2, with two cable ends 16 and 18 and connected conductors 11 and 12 are aligned in the cable direction A1. The first cable end 16 has a first tapered polymer section 15 and the second end 18 has a second tapered polymer section 19. As indicated in fig. 2a, a distance d between the tapered polymer sections 15 and 19 is a function of a radius r. The distance d has an upper limit Dmax which is the maximum width between the tapered polymer sections 15 and 19. D15 is an outer (and maximum) diameter of the polymer section 15 while D19 is an outer (and maximum) diameter of the polymer section 19.

In general, it is desired that the polymer section of the cable joint 1 gets similar electrical and/or mechanical properties as other parts of the joined cable.

In the present embodiment, the conductors 11 and 12 are initially covered with an inner semi-conductive layer 21, followed by an insulation layer 22 and an outer semi-conductive layer 23. The inner semi-conductive layer 21, the insulation layer 22 and the outer semi-conductive layer 23 are all polymer layers. The method and machine disclosed in the following paragraphs may be applied to any of those polymer layers. Other components of a cable joint 1 for high voltage subsea cable such as a barrier layer 25, a sheath layer 26 and armoring are applied later and are not part of this invention.

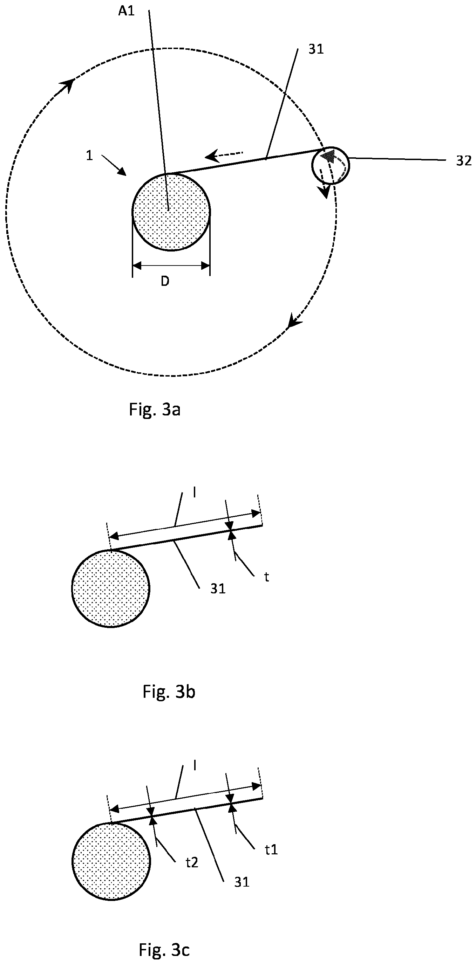

The polymer films 31 used herein are prepared specifically for the purpose of building up the polymer layers of the cable joint as will be described below. The polymer films 31 has a thickness range of 50 to 1000 µm. Typical polymer materials used for the polymer film 31 are polypropylene or polyethylene. Usually, the same polymer material is used for all the layers 21, 22, 23, the main difference being that carbon black is added as a filler to the polymer material for improving the electrical conductivity of the semi-conductive layers 21 and 23. The polymer film is usually provided with a constant thickness t over the entire length 1 of the polymer film 31 (see fig 3b), or sometimes has varying thicknesses t1, t2 over the length 1 of the polymer film, as shown in fig 3c.

### First embodiment

A first embodiment of the method for applying the polymer film 31 to the electric conductor joint 2will now be described with reference to fig. 2b. As shown in fig. 2b, the electric conductor joint 2, with two cable ends 16 and 18 and connected conductors 11 and 12 are aligned in the cable direction A1. An end of polymer film 31 is attached to the electric conductor joint 2, in fig. 2c it is attached to the conductors 11 and 12 by manually attaching the end of the polymer film 31 and rotating the roll 32 containing the polymer film 31 around the cable joint 1 until there is sufficient friction holding the polymer film 31 in place outside of the conductors 11, 12 and the connection 13.

The roll 32 with the polymer film 31 is then rotated about the electric conductor joint 2. Preferably, the roll 32 rotates without any translation or movement in cable direction A1, that means that the polymer film 31 is simply spooled off the roll 32 and wound onto the surface of the electric conductor joint 2 without any substantial movement or pitch in the cable direction A1. At the same time, the roll 32 is rotating about its own longitudinal center axis A2, thereby releasing the polymer film 31 as shown in fig. 3a. It should also be noted that cable direction A1 and the longitudinal center axis A2 are preferably substantially parallel to each other.

In fig. 2b, it is further shown that the polymer film 31 here has a width w31 being equal to the distance D (fig. 2a) for the radius r at which the polymer film 31 is applied. Hence, each layer of film 31 is here parallel to previous layers.

As shown in fig. 3a, the electric conductor joint 2 has a diameter D. The diameter D may vary in the cable direction A1. This may be due to the connection 13 between the connectors 11 and 12 being slightly larger than the conductors 11 and 12, for example because the connection 13 is a welded connection or is a mechanical clamp. By applying the polymer film 31 outside of the conductor joint 2, the variations in diameter may be compensated for by the elasticity and flexibility of the film.

It should be noted that the above method may be performed manually by one or more operators moving the roll 32 around the cable joint 1. Of course, during such a manual operation, the roll 32 will not always be held with its axis A2 parallel to the cable direction A1. There may also be some translation or movement of the roll 32 in the cable direction A1 during such manual operations.

### Second embodiment

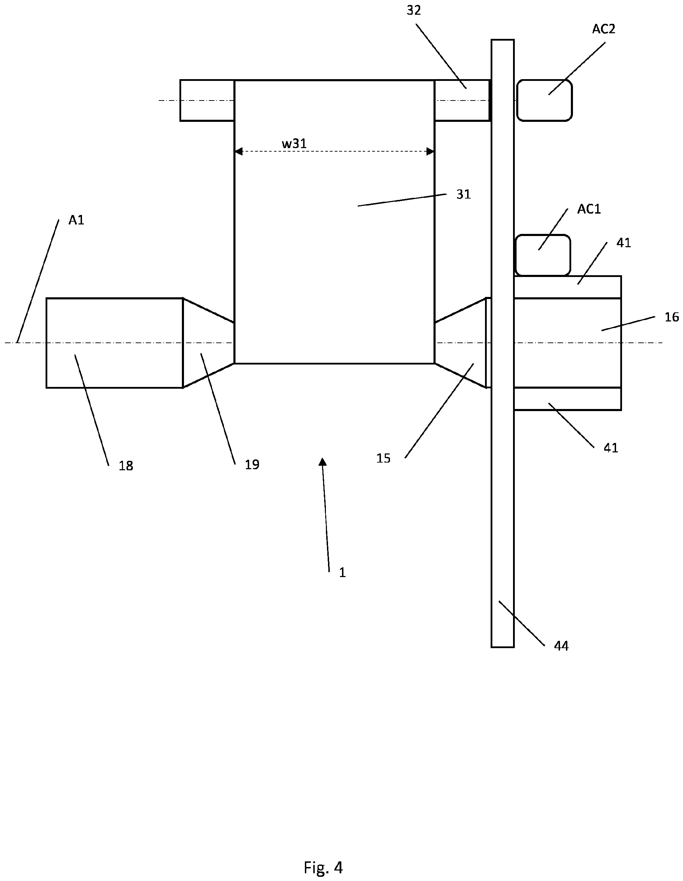

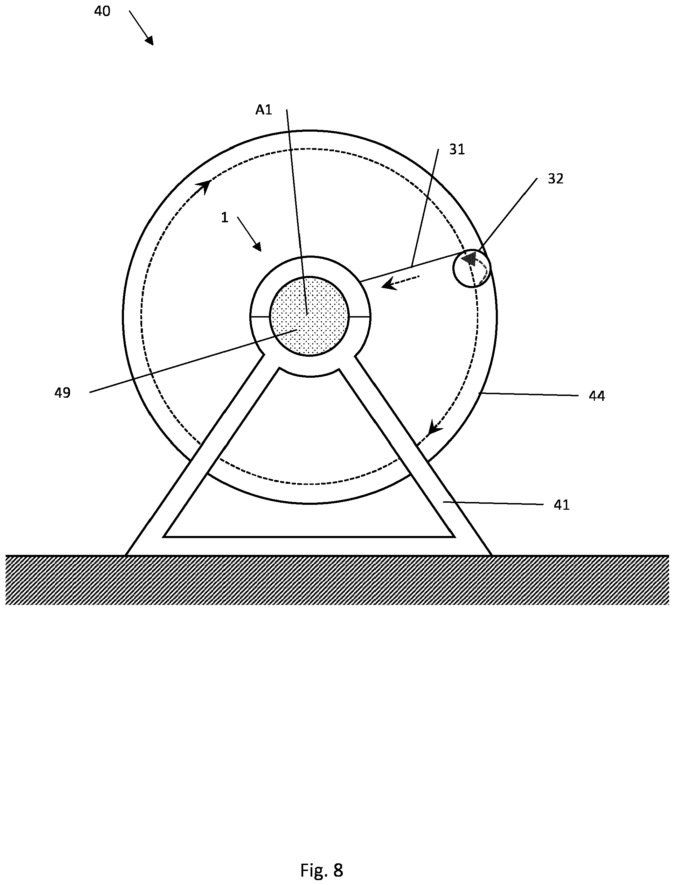

In a second embodiment, a machine 40 is used to apply the polymer film 31. First, the machine 40 will be described with reference to fig. 4 and fig. 8. The machine 40 comprises a base frame 41 with an opening 49 to support the first cable end 16 near the electric conductor joint 2. As in the first embodiment above, also here the two cable ends 16, 18 are aligned in the cable direction A1.

The base frame 41 is preferably made of different smaller components to allow installing the base frame 41 around the first cable end 16 without having to move the first cable end 16 into the machine 40.

The machine 40 further comprises a first roll supporting structure 44 that is moveably connected to the base frame 41 and a first actuator AC1 for moving the first roll supporting structure 44 relative to the base frame 41 around the conductor joint 2. The first roll supporting structure 44 is connected to a first end of the roll 32 with the polymer film 31. The machine 40 comprises a second actuator AC2 for rotating the roll 32 relative to the first roll supporting structure 44, thus releasing polymer film 31 from the roll 32.

It should be noted that the first actuator AC1 and the second actuator AC2 are not essential features, as the machine 40 may be operated manually by rotating the first roll supporting structure 44 by hand. The tension from the polymer film 31 when the roll 32 is rotated around the conductor joint 2 will typically be sufficient to pull more polymer film 31 from the roll 32.

### Third embodiment

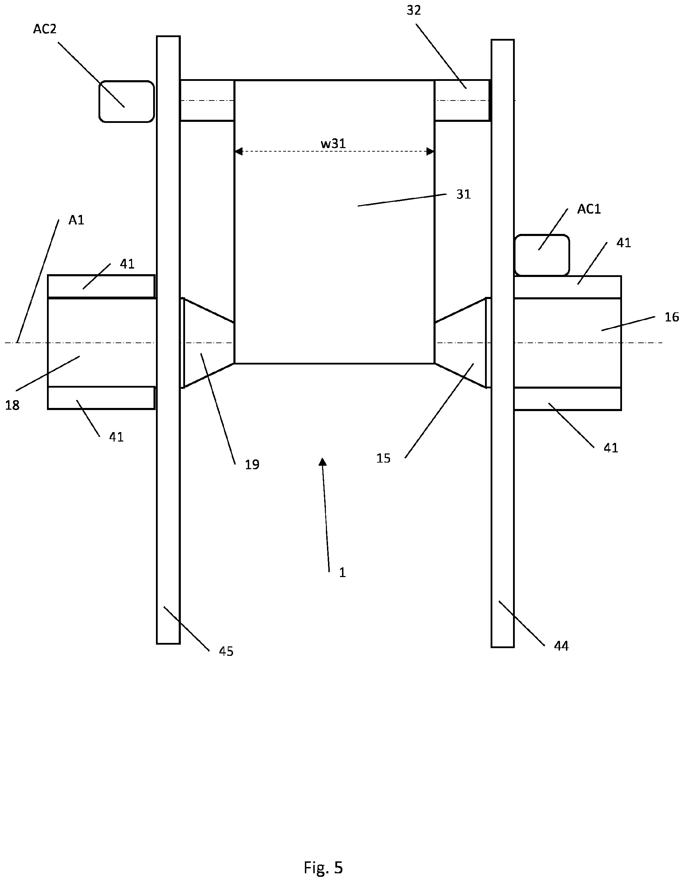

A third embodiment will now be described with reference to fig. 5. The third embodiment is similar to the second embodiment, and only differences with respect to the second embodiment will be described in detail herein.

In fig. 5, it is shown that the machine 40 comprises a further base frame 41 for supporting the second cable end 18 and a second roll supporting structure 45 connected to a second end of the roll 32.

This is considered a more stable and reliable machine, as both ends of the roll 32 is supported.

### Fourth embodiment

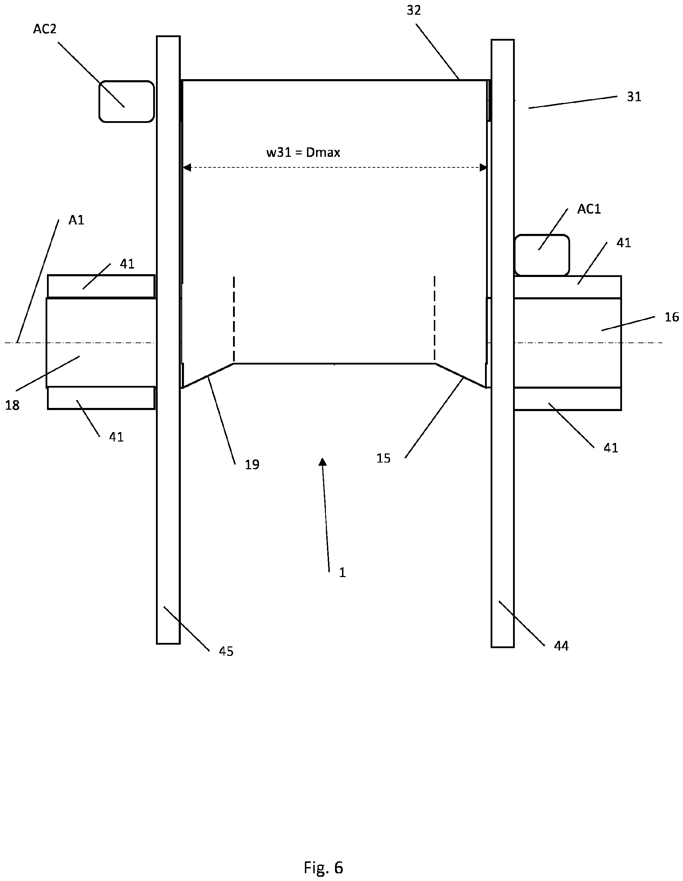

A fourth embodiment will now be described with reference to fig. 6. The fourth embodiment is similar to the third embodiment, and only differences with respect to the third embodiment will be described in detail herein.

In this embodiment, the width w31 of the film 31 is equal to the maximum distance Dmax. Here, the layers of film 31 is following the cylindrical shape of the conductors and the tapered shape of the cable ends and hence, the layers of film 31 are not parallel to each other.

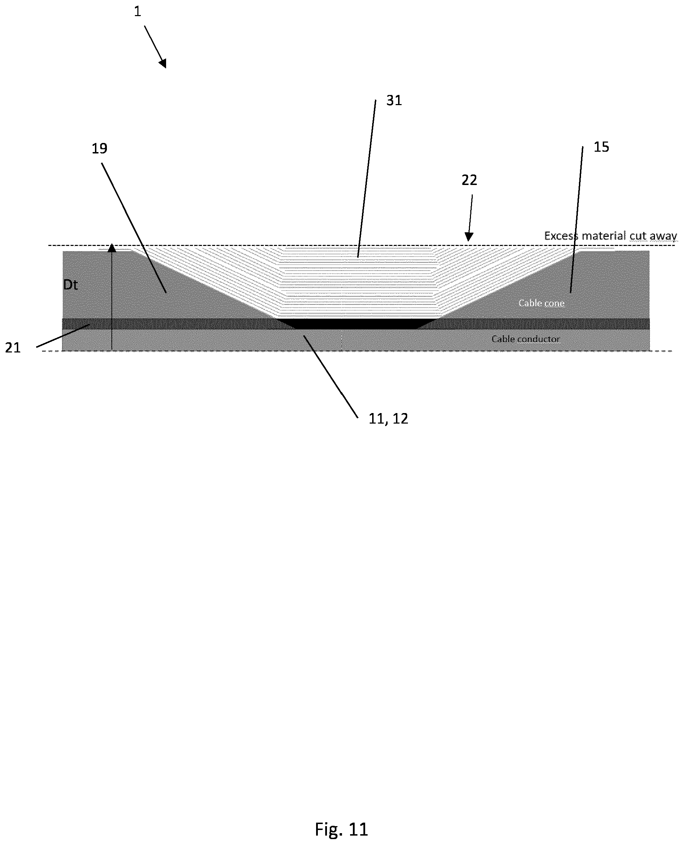

It is now referred to fig. 11 showing the result of this embodiment. Here, when all layers have been applied, any excessive polymer film 31 extending beyond a predetermined threshold diameter Dt will be removed. The predetermined threshold diameter Dt will typically be equal to or slightly larger than the diameter D15, D19 of the polymer sections 15, 19.

### Fifth embodiment

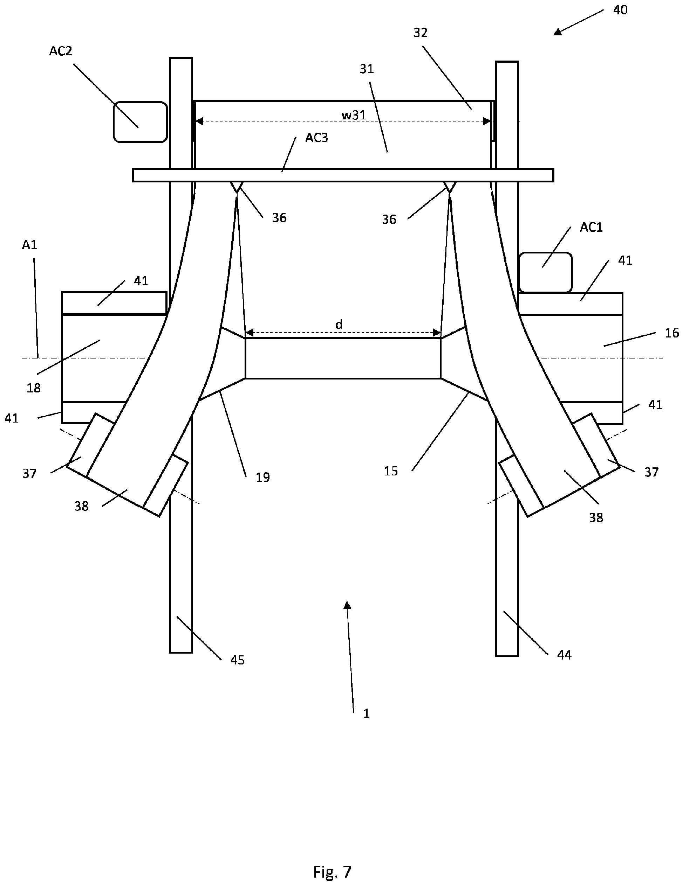

A fifth embodiment will now be described with reference to fig. 7. The fifth embodiment is similar to the third embodiment, and only differences with respect to the third embodiment will be described in detail herein.

In the fifth embodiment, the machine 40 comprises trimming knifes 36 and a third actuator AC3 for moving the trimming knives 36 relative to the roll 32. In addition, the machine 40 comprises rollers 37 for receiving residual film 38 being cut off from the film 31 applied to the conductor joint 2.

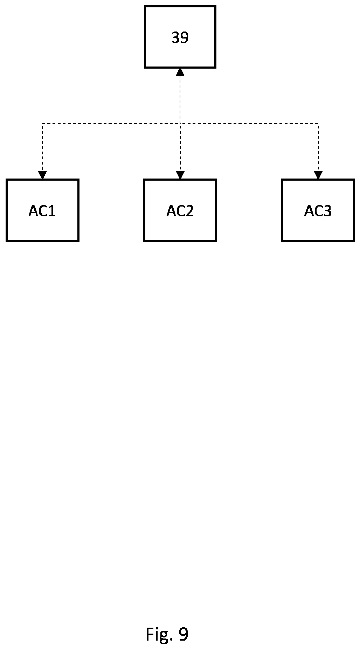

It is now referred to fig. 9. Here it is shown a control system 39 is connected to the first actuator AC1, to the second actuator AC2 and to the third actuator AC3 for adjusting the position of the trimming knives 36 and hence the width w31, for example based on the number of rotations of the first actuator AC1 and/or based on the number of rotations of the second actuator AC2. Of course, further sensors, such as an optical sensor etc., may be used to control the position of the trimming knives 36.

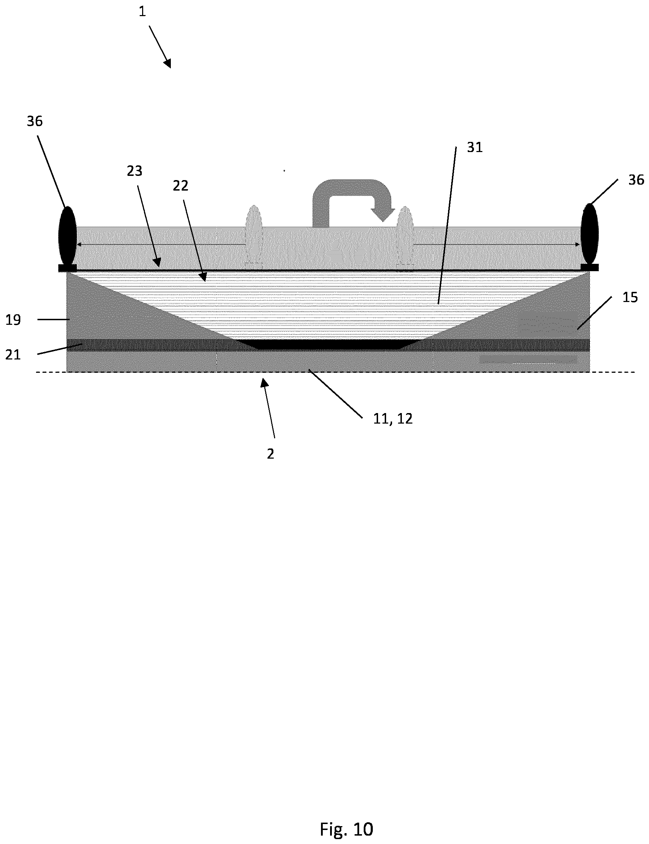

The trimming knives 36 are adjusting the width w31 of the polymer film 31 according to the distance d between the tapered ends at the current radius r of the tapered ends of the polymer section 15, 19, as discussed above. Fig. 10 shows the resulting polymer layers 31 for an insulation layer 22. Here, the layers of film 31 are parallel to the other layers of the film.

In an alternative embodiment, the position of the trimming knifes 36 may be adjusted manually.

### Further embodiments

It should be noted that the control system 39 of fig. 9 may be used to control the first actuator AC1 and second actuator AC2 of the second, third and fourth embodiments above.

### LIST OF REFERENCE NUMBERS

1 - cable joint
2 - electric conductor joint
11 - first conductor
12 - second conductor
13 - connection
15 - first polymer section
16 - first cable end
18 - second cable end
19 - second polymer section
21 - inner semi-conductive layer
22 - insulation layer
23 - outer semi-conductive layer
25 - barrier layer
26 - sheath layer
27 - armouring
31 - polymer film
32 - roll
36 - trimming knife
37 - rollers for residual film
38 - residual film
39 - control system
40 - machine
41 - base frame
44 - first roll supporting structure
45 - second roll supporting structure
49 - opening
A1 - cable direction
A2 - longitudinal center axis
AC1 - first actuator
AC2 - second actuator
AC3 - third actuator
Dmax - maximum width between the tapered end of the polymer sections 15 and 19
D15 - outer (and maximum) diameter of the polymer section 15
D19 - outer (and maximum) diameter of the polymer section 19

## Claims

1. A method for applying a polymer film (31) onto an electric conductor joint (2), wherein the method comprises the steps of:
- providing an electric conductor joint (2) oriented in a cable direction (A1);
- providing a roll (32) with a polymer film (31);
- securing an end of the polymer film (31) to the electric conductor joint (2);
- moving the roll (32) about the electric conductor joint (2) thereby releasing the polymer film (31) from the roll (32) and rotating the roll (32) about an longitudinal center axis (A2);
- orienting the longitudinal center axis (A2) of the roll (32) substantially parallel with the cable direction (A1) during the movement of the roll (32) about the electric conductor joint (2).

2. The method according to claim 1, wherein the step of moving the roll (32) about the electric conductor joint (2) comprises the step of:
- controlling the movement of the roll (32) about the electric conductor joint (2) by means of a first actuator (AC1).

3. The method according to claim 1, wherein the method further comprises the step of:
- rotating the roll (32) to release the polymer film (31) from the roll (32).

4. The method according to claim 3, wherein the step of rotating the roll (32) comprises:
- controlling the rotation of the roll (32) by means of a second actuator (AC2).

5. The method according to any one of the previous claims, wherein the method comprises the further step of:
- trimming a width (w31) of the polymer film (31) during application of the polymer film (31) to the conductor joint (2).

6. The method according to any one of the above claims, wherein the method comprises a step of forming the electric conductor joint (2) prior to the step of moving the roll (32); wherein the step of forming the electric conductor joint (2) comprises:
- providing two cable ends (16, 18) oriented in the cable direction (A1);
wherein each cable end (16, 18) comprises a conductor (11, 12) and a tapered end of a polymer section (15, 19) provided at least partially outside of the conductors (11, 12);
- connecting the conductors (11, 12) to each other to form the electric conductor joint (2).

7. The method according to claim 5 and 6, wherein the step of trimming the width (w31) of the polymer film (31) further comprises trimming the width (w31) according to a distance (d) between the tapered ends at a current radius (r) of the tapered ends of the polymer section (15, 19).

8. The method according to anyone of claims 1 to 4 in combination with claim 6, wherein the step of providing the roll (32) with the polymer film (31) comprises the step of:
- providing the roll (32) with the polymer film (31) having a width (w31) being at least as wide as a maximum width (Dmax) between the tapered end of the polymer sections (15, 19).

9. The method according to claim 8, wherein the method comprises the further step of:
- trimming any excessive polymer film (31) extending beyond a predetermined threshold diameter (Dt) being equal to or larger than a diameter (D15, D19) of the polymer sections (15, 19).

10. The method according to any of the previous claims, wherein the step of providing a roll (32) with a polymer film (31) further comprises:
- providing a polymer film (31) with varying thickness (t) along a length (1) of the polymer film (31).

11. A machine (40) for applying a polymer film (31) to an electric conductor joint (2), wherein the electric conductor joint (2) is formed by providing two cable ends (16, 18) oriented in a cable direction (A1) and by connecting the conductors (11, 12) to each other to form the electric conductor joint (2);
wherein the machine (40) comprises:
- a base frame (41);
wherein the base frame (41) is provided with an opening (49) in which one of the cable ends (16, 18) is supported;
- a first roll supporting structure (44);
wherein the first roll supporting structure (44) comprises a roll (32) with a polymer film (31);
wherein the first roll supporting structure (44) is moveably connected to the base frame (41) and is adapted to moving the roll (32) about the electric conductor joint (2) , thereby releasing the polymer film (31) from the roll (32).

12. The machine (40) according to claim 11, wherein the first roll supporting structure (44) is connected to a first end of the roll (32) and wherein the machine (40) comprises a second roll supporting structure (45) connected to a second end of the roll (32).

13. The machine (40) according to claim 11 or 12, wherein the machine (40) comprises a trimming knife (36) configured to trim a width (w31) of the polymer film (31) during application of the polymer film (31) to the electric conductor joint (2).

14. The machine (40) according to any one of claims 11 to 13, wherein the machine (40) further comprises:
- a first actuator (AC1) for moving the first roll supporting structure (44) thereby moving the roll (32) about the electric conductor joint (2).

15. The machine (40) according to any one of claims 11 to 14, wherein the machine (40) further comprises:
- a second actuator (AC2) configured to control the rotation of the roll (32) relative to the roll supporting structure (44, 45).

16. The machine (40) according to any one of claims 11 to 15, wherein the machine (40) comprises a third actuator (AC3) for moving the trimming knife (36).

17. The machine (40) according to any one of claims 11 to 16, wherein the machine (40) comprises a control system (39) for controlling the first actuator (AC1) and/or the second actuator (AC2) and/or the third actuator (AC3).
